# EUROPÄISCHE PATENTSCHRIFT

(11) **EP 2 778 100 B1**
(45) Veröffentlichungstag und Bekanntmachung des Hinweises auf die Patenterteilung: **24.02.2016**
(21) Anmeldenummer: 14156957.4
(22) Anmeldetag: 27.02.2014
(51) Int. Cl.: B65G 39/02, B65G 39/09

(54) **Förderrolle mit Versteifungselement**
Conveyor roller with reinforcement element
Rouleau de manutention avec raidisseur

(30) Priorität: 11.03.2013 DE 202013002290 U
(43) Veröffentlichungstag der Anmeldung: 17.09.2014
(73) Patentinhaber: Interroll Holding AG, 6592 Sant' Antonino (CH)
(72) Erfinder: Weichbrodt, Reinhold, 42929 Wermelskirchen (DE); Malina, Georg, 42929 Wermelskirchen (DE)
(74) Vertreter: Eisenführ Speiser

(56) Entgegenhaltungen:
- EP-B1- 1 671 901
- US-A1- 2005 217 967
- US-A1- 2009 045 029
- US-A1- 2011 062 000

## Beschreibung

Die Erfindung betrifft eine Förderrolle für Förderanlagen zum Fördern von Behältern, Paletten und dergleichen, umfassend einen Rollenkörper mit einer Rollenachse, dessen Außenumfangsfläche eine Auflagefläche für Fördergut darstellt, und ein Kopfelement, das mit einem Einführabschnitt mit einer zylindrischen Außenoberfläche in ein hohles Ende des Rollenkörpers eingeführt ist.

Die Erfindung betrifft ferner ein Kopfelement für eine Förderrolle für Förderanlagen zum Fördern von Behältern, Paletten und dergleichen, das Kopfelement umfassend einen Einführabschnitt mit einer zylindrischen Außenoberfläche, mit dem das Kopfelement in ein hohles Ende eines Rollenkörpers einer Förderrolle einführbar ist.

Die Erfindung betrifft zudem ein Verfahren zur Herstellung einer eingangs genannten Förderrolle.

Förderrollen dieser Bauart werden für unterschiedliche Zwecke in logistischen Anwendungen eingesetzt. So können sie beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. Dabei wird regelmäßig eine Förderstrecke aufgebaut, die aus mehreren nebeneinander angeordneten Rollen besteht, deren obere Umfangsfläche jeweils zur Aufnahme des Fördergutes dient. In diesen Förderstrecken sind einerseits Leerlaufrollen angeordnet, die antriebslos sind und lediglich in einem Fördergestell drehbar gelagert sind. Ferner sind in diesen Förderstrecken angetriebene Förderrollen angeordnet, die motorbetrieben sind und durch eine elektrische Antriebseinheit in Rotation versetzt werden. Die motorbetriebenen Förderrollen dienen einerseits dazu, unmittelbar über die äußere Umfangsfläche ihres Rollenkörpers das Fördergut zu transportieren. Andererseits kann mittels einer Übertragung der Rotation der motorbetriebenen Förderrolle auf eine oder mehrere Leerlaufrollen mittels eines Übertragungselementes, beispielsweise eines Riemenantriebs, durch die motorbetriebene Förderrolle auch eine oder mehrere Leerlaufrollen in Rotation versetzt werden, um auch über deren äußere Umfangsflächen das Fördergut anzutreiben.

Förderrollen sind vorzugsweise solcherart aufgebaut, dass der Rollenkörper zumindest abschnittsweise hohl ausgebildet ist und insbesondere ein hohles Ende, vorzugsweise zwei hohle Enden aufweist. Bei motorbetriebenen Förderrollen ist die Antriebseinheit vorzugsweise innerhalb eines Innenraums des Rollenkörpers angeordnet. Wenn die Antriebseinheit innerhalb des Rollenkörpers angeordnet ist, sind keine außerhalb des Rollenkörpers angeordneten mechanischen Komponenten erforderlich, um die Rotation der Rolle zu erzeugen. Eine im Innenraum des Rollenkörpers angeordnete Antriebseinheit kann beispielsweise eine Kupplungseinheit aufweisen, die ausgebildet und angeordnet ist, ein Drehmoment von der Antriebseinheit auf eine Innenumfangsfläche des Innenraums des Rollenkörpers zu übertragen.

Aus der EP 1 671 901 B1 ist eine Förderrolle bekannt, bei der ein als Buchse ausgebildetes Kopfelement in ein hohles Ende des Rollenkörpers eingesteckt und damit starr verbunden ist. Das als Buchse ausgebildete Kopfelement der EP 1 671 901 B1 nimmt ein Lager auf, das an einem Zapfen eines Gestells drehbar gelagert ist. Auf diese Weise kann das Ende des Rollenkörpers einfach drehbar gegenüber einem Gestell gelagert werden. Damit das Kopfelement zumindest abschnittsweise, nämlich mit seinem Einführabschnitt, in das hohle Ende des Rollenkörpers eingeführt werden kann, ist vorzugsweise der Querschnitt des Einführabschnitts in einer Ebene orthogonal zur Rollenachse an den Querschnitt des hohlen Endes des Rollenkörpers, ebenfalls in einer Ebene orthogonal zur Rollenachse, angepasst.

Da der Rollenkörper einer Förderrolle, zumindest jedoch meist das hohle Ende dieses Rollenkörpers, hohlzylindrisch ausgebildet ist, weist auch der Einführabschnitt eine zylindrische Außenoberfläche auf, die in das Ende des Rollenkörpers eingeführt werden kann. Dadurch entsteht ein Presssitz, so dass eine Kraftübertragung durch diesen Presssitz zwischen dem Einführabschnitt und dem hohlen Ende des Rollenkörpers und damit zwischen den Rollenkörper und dem Kopfelement erzeugt wird.

Aus US 2009/0045029 A1 sind eine Förderrolle und ein Kopfelement gemäß den Oberbegriffen der Ansprüche 1 und 12 bekannt.

Solche existierenden Förderrollen sind einfach herzustellen und zu montieren. Es ist jedoch wünschenswert, existierende Förderrollen weiter zu verbessern. Ferner ist es wünschenswert, die Zuverlässigkeit existierender Förderrollen weiter zu erhöhen und/oder die Anpassbarkeit von Förderrollen an unterschiedliche Einsatzbereiche weiter zu erhöhen.

Es ist daher eine Aufgabe der vorliegenden Erfindung, eine Förderrolle der eingangs genannten Art bereitzustellen bzw. herzustellen, die eine oder mehrere der genannten Bedarfe zumindest teilweise befriedigt. Ferner ist es eine Aufgabe der vorliegenden Erfindung, ein Kopfelement der eingangs genannten Art bereitzustellen, das einen oder mehrere der genannten Bedarfe zumindest teilweise befriedigt.

Diese Aufgabe wird erfindungsgemäß gelöst durch eine Förderrolle mit den Merkmalen des Anspruchs 1.

Der Erfindung liegt der Erkenntnis zugrunde, dass eine zuverlässige Verbindung zwischen Kopfelement und Rollenkörper funktionsentscheidend ist, um die Zuverlässigkeit von Fördersystemen zu erhöhen. In einem Fördersystem werden angetriebene Förderrollen untereinander antriebstechnisch von Rolle zu Rolle durch Antriebsriemen verbunden. Diese Antriebsriemen laufen oft über einen Antriebsabschnitt des Kopfelements, was voraussetzt, dass der Rollenkörper der Förderrolle derart mit dem Kopfelement verbunden ist, dass eine entsprechende Kraft- bzw. Drehmomentübertragung gewährleistet ist, beispielsweise durch einen Form- und/oder Kraft- bzw. Reibschluss. Insbesondere bei solchen Antriebsrollen, in denen beispielsweise eine 24V DC Motor-Getriebe-Einheit eingebaut ist und die beispielsweise bis zu 10 Förderrollen antreiben, ist eine zuverlässige Verbindung zwischen Kopfelement und Rollenkörper funktionsentscheidend für das Fördersystem.

Bei existierenden Förderrollen wird diese Verbindung mittels eines langen Presssitzes realisiert. Das bedeutet, dass das Kopfelement über einen relativ langen Einführabschnitt verfügt, der tief in ein hohles Ende des Rollenkörpers eingepresst wird. Durch einen solchen langen Presssitz kann in existierenden Förderrollen gewährleistet werden, dass selbst bei ungünstigen Toleranzverhältnissen (großer Rollenkörper, kleines Kopfelement) noch eine hinreichende Presspassung gewährleistet ist. Das Toleranzfeld zwischen Rollenkörper und Kopfelement kann 0,2 bis 0,4mm, teilweise sogar bis 0,6mm, betragen.

Ein Nachteil an dieser Konstruktion ist es jedoch, dass die für eine hinreichende Presspassung erforderliche Länge des Einführabschnitts des Kopfelements die Gesamtlänge der Förderrolle in Richtung der Rollenachse deutlich vergrößert und damit eine kurze Bauweise der Förderrollen, insbesondere auch der motorbetriebenen Förderrollen, nicht möglich ist. In bestimmten Anwendungsgebieten sind jedoch Fördersysteme mit kurzen Förderrollen, d. h. mit sowohl kurzen Leerlaufrollen als auch kurzen motorbetriebenen Förderrollen, erforderlich oder zumindest von Vorteil, beispielsweise beim Transport von kleinen Gebinden.

Ferner ist das Kopfelement meist aus Kunststoff ausgebildet. Dieses - gegenüber dem meist aus Metall, insbesondere Edelstahl, ausgebildeten Rollenkörper - relative weiche Material kann unter entsprechendem Druck nachgeben, was die Zuverlässigkeit der Verbindung zwischen Kopfelement und Rollenkörper mindern kann.

Der Erfindung liegt ferner die Erkenntnis zugrunde, dass die Übertragung der Rotation von einer Rolle zur anderen, insbesondere von einer motorbetriebenen Förderrolle auf eine oder mehrere Leerlaufrollen, in zuverlässiger Weise auch bei Förderrollen mit deutlich kürzerer Bauweise ermöglicht werden kann, wenn der Einführabschnitt des Kopfelements ein Versteifungselement aufweist. Damit kann auch bei deutlich kürzeren Förderrollen, bei der der Einführabschnitt des Kopfelements gegenüber existierenden Förderrollen deutlich verkürzt ist, die Zuverlässigkeit von Förderrollen, sowohl motorbetriebenen Förderrollen als auch Leerlaufrollen, verbessert werden und ferner auch die Präzision der Förderung von Fördergut, insbesondere bezüglich des Startens und Stoppens, erhöht bzw. auch bei Förderrollen mit kurzer Bauweise sichergestellt werden.

Bei der erfindungsgemäßen Förderrolle weist der Einführabschnitt mit der zylindrischen Außenoberfläche ein Versteifungselement auf. Dieses Versteifungselement ist vorzugsweise angeordnet und ausgebildet, eine Drehmomentübertragung zwischen der zylindrischen Außenoberfläche des Einführabschnitts und dem hohlen Ende des Rollenkörpers zu verbessern. Insbesondere ist das Versteifungselement angeordnet und ausgebildet, die Steifigkeit des Einführabschnitts zu erhöhen und/oder die Verformbarkeit des Einführabschnitts zu verringern. Das Versteifungselement kann vorzugsweise die Festigkeit, insbesondere die geometrische Festigkeit, des Kopfelements erhöhen, so dass die Zuverlässigkeit der Drehmomentübertragung gesteigert wird.

Da der Einführabschnitt ein Versteifungselement aufweist, wird die Formstabilität des Einführabschnitts erhöht, so dass auch mit einem gegenüber existierenden Förderrollen deutlich verkürzten Einführabschnitt die geforderte zuverlässige Verbindung zwischen Rollenkörper und Kopfelement sichergestellt wird. Insbesondere kann durch das Vorsehen des Versteifungselements eine Verbindung sichergestellt werden, die eine relative Drehbewegung und/oder eine relative Axialbewegung zwischen Kopfelement und Rollenkörper verhindert oder zumindest deutlich vermindert. Dadurch, dass das Kopfelement ein Versteifungselement aufweist, kann der in existierenden Förderrollen erforderliche lange Presssitz deutlich verkürzt werden, da das Versteifungselement sicherstellt, dass der Einführabschnitt des Kopfelements auch bei deutlich kürzerer Länge hinreichend steif ist und damit im gesamten Toleranzbereich sowohl des Kopfelements als auch des Rollenkörpers eine sichere Übertragung des Drehmoments zwischen Rollenkörper und Kopfelement gewährleistet werden kann.

Auf diese Weise ermöglicht das Vorsehen eines Versteifungselements eine deutlich verkürzte Bauweise von Förderrollen, d. h. sowohl von Leerlaufrollen als auch insbesondere von motorbetriebenen Förderrollen, während gleichzeitig die Zuverlässigkeit dieser Förderrollen gegenüber existierenden Förderrollen gleich bleibt bzw. sogar erhöht werden kann. Dadurch können Fördersysteme auch in solchen Einsatzgebieten zur Anwendung kommen, bei denen gegenüber existierenden Förderrollen deutlich kürzere Längen erforderlich sind.

Ferner kann durch das Vorsehen eines Versteifungselements auch einer Schrumpfung des Kopfelements (insbesondere eines aus Kunststoff ausgebildeten Kopfelements) unter Tiefkühlbedingungen vorgebeugt werden, wenn das Versteifungselement aus einem Material ausgebildet ist, welches den gleichen oder einen ähnlichen Wärmeausdehnungskoeffizienten aufweist wie der Rollenkörper.

Bevorzugt ist, dass das Kopfelement einen inneren Hohlraum aufweist, der insbesondere ausgebildet ist, um Lagerelemente aufzunehmen, über die die Förderrolle an einem Gestell gelagert werden kann. Vorzugsweise weisen auch der Einführabschnitt und das Versteifungselement einen solchen inneren Hohlraum auf. Insbesondere ist der innere Hohlraum zur Aufnahme eines Wälzlagers für die Lagerung eines Lagerzapfens ausgebildet. Der Lagerzapfen kann beispielsweise gebildet werden durch eine mit einem Innengewinde versehenen Hülse, die am Innenring des Wälzlagers gelagert ist, und eine Schraube, welche in dieses Innengewinde eingeschraubt werden kann.

Die Förderrolle kann als Leerlaufrolle oder als motorbetriebene Förderrolle ausgebildet sein. In einer Ausgestaltung als motorbetriebene Förderrolle ist die Förderrolle gekennzeichnet durch eine Antriebseinheit, die ausgebildet und angeordnet ist, ein Drehmoment auf den Rollenkörper zu übertragen.

Besonders bevorzugt ist es, dass der Einführabschnitt und das hohle Ende des Rollenkörpers jeweils einen zylindrischen Querschnitt aufweisen. Als Querschnitt wird hier ein Schnitt in einer Eben orthogonal zur Rollenachse verstanden. Insbesondere wenn der zylindrische Einführabschnitt des Kopfelements in ein hohles Ende des Rollenkörpers mit einem kreisförmigen Hohlquerschnitt eingeführt wird, ist es von großem Vorteil, wenn der Einführabschnitt ein Versteifungselement aufweist, um den Reibschluss zwischen der zylindrischen Außenoberfläche des Einführabschnitts und der zylindrischen Innenfläche des hohlen Endes des Rollenkörpers in zuverlässiger Weise herzustellen und über die Betriebsdauer der Förderrolle beizubehalten. Ein Kopfelement, bei dem der Einführabschnitt ein Versteifungselement aufweist, kann eine Verminderung oder ein Versagen des Reibschlusses zwischen der zylindrischen Außenoberfläche des Einführabschnitts und einer zylindrischen Innenfläche des hohlen Endes des Rollenkörpers verhindern oder zumindest verringern bzw. hinauszögern und damit einem Durchrutschen bzw. einem Spiel des Kopfelements gegenüber dem Rollenkörper entgegenwirken.

Erfindungsgemäß ist vorgesehen, dass das Versteifungselement ein erstes Material aufweist oder daraus besteht und das Kopfelement ein zweites Material aufweist oder daraus besteht und das erste Material ein anderes Material ist als das zweite Material.

Dadurch wird es beispielsweise möglich, den Einführabschnitt aus einem weicheren und/oder kostengünstigen Material als das Versteifungselement auszubilden, beispielsweise um Gewicht und/oder Kosten zu sparen.

Die besonderen Vorteile des Kopfelements mit einem Einführabschnitt, der ein Versteifungselement aufweist, sind erfindungsgemäß dadurch realisiert, dass das Versteifungselement aus einem anderen Material als das Kopfelement, insbesondere aus einem anderen Material als der Einführabschnitt des Kopfelements, ausgebildet ist oder ein solches anderes Material aufweist. Durch die Kombination unterschiedlicher Materialien kann in vorteilhafter Weise erreicht werden, dass das Versteifungselement die Formstabilität des Einführabschnitts in der gewünschten Weise erhöht. Das erste Material weist eine höhere Steifigkeit auf als das zweite Material.

Besonders bevorzugt ist es, dass das erste Material härter ist als das zweite Material.

Das Kopfelement ist vorzugsweise aus Kunststoff ausgebildet. Um einem Druck, beispielsweise aufgrund einer Bördelung des Rollenkörpers um das Kopfelement oder aufgrund des Presssitzes, standzuhalten, ist es vorteilhaft, das Kopfelement zusätzlich auszusteifen. Durch die Einführung des Versteifungselements kann die Festigkeit, insbesondere die geometrische Festigkeit, des Kopfelements erhöht werden, so dass die Zuverlässigkeit der Drehmomentübertragung gesteigert wird. Durch den Einsatz des Versteifungselements kann die Deformierbarkeit des Presssitzes des Kopfelements deutlich reduziert werden.

Das Kopfelement, insbesondere der Einführabschnitt, wird vorzugsweise aus einem Kunststoff hergestellt, insbesondere einem steifen Kunststoff, wie Polyamid oder vergleichbaren Kunststoffen. Das Kopfelement, insbesondere der Einführabschnitt, ist vorzugsweise nicht mit Füllstoffen wie Fasern, Partikeln oder dergleichen gefüllt oder verstärkt, um ein günstiges Verschleißverhalten in der Paarung zu den auf einem Übertragungsabschnitt laufenden Antriebsriemen zu erreichen. Daher ist jedoch in existierenden Förderrollen gerade ein langer Einführabschnitt erforderlich, um auch den erforderlichen langen Presssitz für eine zuverlässige Verbindung zwischen Kopfelement und Rollenkörper herzustellen. Das Versteifungselement des Einführabschnitts hingegen kann aus einem deutlich härteren bzw. steiferen Material ausgebildet sein, da das Versteifungselement vorzugsweise nicht mit einem Antriebsriemen in Berührung kommt. Beispielsweise kann das Versteifungselement auch aus einem gegenüber dem Einführabschnitt verstärkten bzw. steifen Kunststoff ausgebildet sein.

Besonders bevorzugt ist dabei eine Materialkombination, bei der das erste Material ein Metall, insbesondere Edelstahl, ist und das zweite Material ein Kunststoff ist.

In einer weiteren bevorzugten Ausgestaltung ist das Kopfelement an das Versteifungselement angeformt. Beispielsweise kann das Kopfelement, insbesondere der Einführabschnitt, im Spritzgießverfahren hergestellt werden und an das Versteifungselement angegossen bzw. das Versteifungselement in den Einführabschnitt des Kopfelements eingegossen werden. Bei einer Ausbildung des Versteifungselements beispielsweise aus einem verstärkten Kunststoff kann auch eine einstückige Ausbildung mit dem Einführabschnitt des Kopfelements durch einen Stoffschluss zwischen dem verstärkten Kunststoff des Versteifungselements und einem Kunststoff des Einführabschnitts bevorzugt sein.

Eine weitere bevorzugte Ausgestaltung sieht vor, dass das Versteifungselement als Versteifungsring ausgebildet ist mit einem Innendurchmesser, einem Außendurchmesser und einer axialen Erstreckung. Die Ausbildung des Versteifungselements als Versteifungsring hat den Vorteil einer einfachen geometrischen Gestaltung bei gleichzeitig hoher Steifigkeit. Dabei können Ausgestaltungen bevorzugt sein, bei denen der Innendurchmesser des Versteifungselements gleich, größer oder kleiner als der Innendurchmesser des Einführabschnitts ist und/oder der Außendurchmesser des Versteifungselements gleich oder kleiner als der Außendurchmesser des Einführabschnitts ist und/oder die axiale Erstreckung des Versteifungselements gleich, größer oder kleiner als eine axiale Erstreckung des Einführabschnitts ist. Der Versteifungsring kann somit in seiner Dicke oder Wandstärke, d.h. seiner Erstreckung zwischen seinem Innen- und seinem Außendurchmesser, und in seiner axialen Erstreckung variieren. Die axiale Erstreckung des Versteifungsrings entspricht seiner Breite in Richtung der Rollenachse.

Vorzugsweise kann ein Außenring eines Kugellagers oder Wälzlagers als Versteifungsring eingesetzt werden. Vorzugsweise weist der als Versteifungsring verwendete Außenring jedoch keine Kugellaufnut im Inneren auf.

Bevorzugt ist, dass das Versteifungselement nicht über den zylindrischen Außenumfang des Einführabschnitts hinausragt, d.h. dass der Außendurchmesser des Versteifungselements maximal dem Außendurchmesser des Einführabschnitts entspricht. Besonders bevorzugt ist ferner, dass das Versteifungselement derart an dem Einführabschnitt angeordnet ist, dass ein ringförmiger Teil des Einführabschnitts den Außenumfang des Versteifungselements umgibt.

Eine bevorzugte Ausgestaltung ergibt sich, wenn die axiale Erstreckung des Versteifungsrings mindestens das Doppelte einer Dicke des Versteifungsrings zwischen seinem Innen- und seinem Außendurchmesser beträgt. Eine solche Ausgestaltung des Versteifungsrings mit einer relativ zu seiner Dicke langen Breite entlang der Rollenachse, die vorzugsweise an die gegenüber existierenden Förderrollen verkürzte axiale Erstreckung des Einführabschnitts angepasst ist, kann erreicht werden, dass der Einführabschnitt im Wesentlichen über seine gesamte axiale Erstreckung, d.h. über seine Länge in Richtung der Rollenachse, durch den Versteifungsring versteift wird. Gerade durch die gegenüber existierenden Förderrollen verkürzte Länge des Einführabschnitts ist es von Vorteil, wenn ein Großteil des Einführabschnitts durch das Versteifungselement versteift wird, was bei einer Ausbildung des Versteifungselements als Versteifungsring mit entsprechender Länge in Richtung der Rollenachse gewährleistet werden kann.

Alternativ kann die Dicke des Versteifungsrings zwischen seinem Innen- und seinem Außendurchmesser auch mindestens das Doppelte der axialen Erstreckung des Versteifungsrings betragen. In einer solchen Ausführungsform kann der Versteifungsring die Form einer Lochscheibe bzw. einer Scheibe mit einer zentralen Ausnehmung annehmen.

Ferner ist eine Ausgestaltung bevorzugt, bei der eine Dicke des Versteifungsrings zwischen seinem Innen- und seinem Außendurchmesser entlang der axialen Erstreckung variiert. Dies kann beispielsweise durch Sicken oder Vorwölbungen auf den Außen- und/oder Innenmantelflächen des Versteifungsringes realisiert sein. Solche Ausgestaltungen können die Steifigkeit des Versteifungsrings verbessern und/oder Materialeinsparungen zum Ziel haben.

Besonders bevorzugt ist ferner, dass die Dicke oder Wandstärke, d.h. die Erstreckung zwischen dem Innen- und dem Außendurchmesser, des Versteifungsrings größer ist als die Dicke oder Wandstärke des Rollenkörpers. Dadurch kann beispielsweise in vorteilhafter Weise ein Kräftegleichgewicht zwischen einem durch eine Bördelung aufgebrachten Bördeldruck und der Steifigkeit des Versteifungsrings erzielt werden.

Ferner ist bevorzugt, dass das Kopfelement einen Übertragungsabschnitt zum Übertragen eines Drehmoments an ein Übertragungselement aufweist. Die Vorteile der Erfindung kommen insbesondere zum Tragen, wenn über das Kopfelement die Rotation des Rollenkörpers an eine oder mehrere weitere Rollen übertragen werden soll. Dazu weist das Kopfelement vorzugsweise einen Übertragungsabschnitt auf, der nicht in den Rollenkörper eingeführt wird, sondern in axialer Richtung über den Rollenkörper hinausragt. An diesen Übertragungsabschnitt kann beispielsweise ein Riemenantrieb angeordnet sein, der in Förderrichtung und/oder entgegengesetzt dazu beispielsweise eine motorbetriebene Förderrolle mit direkt, oder indirekt benachbarten Leerlaufrollen verbindet.

Besonders bevorzugt ist es, dass sich der Einführabschnitt an seinem dem Übertragungsabschnitt zugewandten Ende hin verjüngt. Dabei ist ferner besonders bevorzugt, dass das Ende des Rollenkörpers eine Bördelung aufweist. Besondere Vorteile ergeben sich ferner, wenn die Bördelung des Rollenkörpers in das verjüngte Ende des Einführabschnitts eingreift.

Der Einführabschnitt wird vorzugsweise bis zu seinem dem Übertragungsabschnitt zugewandten Ende hin in das hohle Ende des Rollenkörpers eingeführt. Durch die Verjüngung des Einführabschnitts an seinem dem Übertragungsabschnitt zugewandten Ende wird ermöglicht, dass das Ende des Rollenkörpers eine Bördelung aufweist, die in das verjüngte Ende des Einführabschnitts eingreift.

Die Bördelung kann auch als umlaufende Anformung des hohlen Endes des Rollenkörpers an den Einführabschnitt bezeichnet werden. Eine solche Bördelung entspricht dem Einziehen des Endes des Rollenkörpers vorzugsweise um einen Betrag, der der Verjüngung am Ende des Einführabschnitts entspricht. Auf diese Weise kann ein Formschluss zwischen dem Ende des Rollenkörpers und dem dem Übertragungsabschnitt zugewandten Ende des Einführabschnitts erzielt werden, wodurch insbesondere eine axiale Relativbewegung zwischen dem Kopfelement und dem Rollenkörper verhindert oder zumindest deutlich reduziert werden kann, insbesondere, wenn die solche Bördelung an beiden Enden des Rollenkörpers vorgenommen wird. Die Wirksamkeit einer solchen Bördelung hängt jedoch von der Steifigkeit des Materials des Kopfelements, insbesondere des Einführabschnitts ab, da dieses Material eine entsprechende Gegenkraft aufzubringen in der Lage sein muss. Insbesondere die Kombination eines verkürzten Einführabschnitts mit Versteifungselement und einem verjüngten Ende des Einführabschnitts, in das ein eingezogenes Ende des Rollenkörpers im Sinne einer Bördelung eingreift, führt daher zu einer besonders zuverlässigen Verbindung zwischen Kopfelement und Rollenkörper, durch die Relativbewegungen in axialer Richtung und/oder in Drehrichtung um die Rollenachse verhindert oder zumindest vermindert werden können.

Ferner ist insbesondere bevorzugt, dass das Versteifungselement zwischen einem dem Übertragungsabschnitt zugewandten Ende und einem dem Übertragungsabschnitt abgewandten Ende des Einführabschnitts angeordnet ist.

In dieser Ausgestaltung ist das Versteifungselement in axialer Richtung gesehen derart an dem Einführabschnitt angeordnet, dass das Versteifungselement zwischen einem dem Übertragungsabschnitt zugewandten und einem dem Übertragungsabschnitt abgewandten, das heißt dem Inneren des Rollenkörpers zugewandten, Ende des Einführabschnitts angeordnet ist.

Eine bevorzugte Ausgestaltung kann sich auch dadurch ergeben, dass ein im Einbauzustand des Kopfelements einem Inneren des Rollenkörpers zugewandtes Ende, dass heißt ein dem Übertragungsabschnitt abgewandtes Ende, des Einführabschnitts und ein dem Inneren des Rollenkörpers zugewandtes Ende des Versteifungselements bezogen auf die Rollenachse des Rollenkörpers, d.h. in axialer Richtung, bündig abschließen.

Ferner ist bevorzugt, dass das Versteifungselement derart an dem Einführabschnitt angeordnet ist, dass Einbauzustand, in dem der Einführabschnitt in das hohle Ende des Rollenkörpers eingeführt ist, nur der Einführabschnitt oder ein Teil des Einführabschnitts, nicht jedoch das Versteifungselement, mit der Innenmantelfläche des hohlen Endes des Rollenkörpers in Kontakt kommt.

Bevorzugt ist insbesondere, dass der Übertragungsabschnitt außenumfänglich wenigstens ein W-förmiges Umfangsprofil aufweist, um ein als Poly-V-Riemen ausgebildetes Übertragungselement aufnehmen zu können. Auf diese Weise kann ein solcher Poly-V-Riemen um das Umfangsprofil des Übertragungsabschnitts gelegt werden und die Förderrolle auf diese Weise mit weiteren Förderrollen verbunden werden. Insbesondere bevorzugt ist, dass der Übertragungsabschnitt außenumfänglich ein Umfangsprofil mit einer Doppel-W-Form aufweist, um zwei als Poly-V-Riemen ausgebildete Übertragungselemente aufnehmen zu können. Noch weiter ist bevorzugt, dass der Übertragungsabschnitt außenumfänglich ein Mehrfach-V-Umfangsprofil aufweist, um einen oder mehrere als Poly-V-Riemen ausgebildete Übertragungselemente aufnehmen zu können.

Solche Poly-V-Riemen sind beispielsweise von der Firma Hutchinson verfügbar. Anstelle eines W-Profils kann auch ein Mehrfach-V-Profil am Umfang des Übertragungsabschnitts ausgebildet sein, um Poly-V-Riemen mit mehr als zwei V-förmigen Innenkeilen aufnehmen zu können. Die Poly-V-Riemen besitzen gegenüber herkömmlichen Riemen eine vergrößerte Anlagefläche. Hierdurch lassen sich höhere Drehmomente übertragen. Die Übertragung höherer Drehmomente fördert jedoch das Versagen des Reibschlusses zwischen Kopfelement, insbesondere Einführabschnitt, und Rollenkörper. Um eine höhere Drehmomentübertagung zuverlässig zu realisieren ist es daher erforderlich, eine drehmomentsteife Verbindung zwischen Kopfelement und hohlem Ende der Förderrolle für entsprechend hohe Drehmomente sicherzustellen. Insbesondere bei motorbetriebenen Förderrollen mit kurzer Baulänge ist daher das Vorsehen eines Versteifungsrings von Vorteil, um auch mit einem entsprechend kurzen Einführabschnitt die erforderliche Drehmomentübertragung zuverlässig sicherstellen zu können.

Gemäß einem weiteren Aspekt der Erfindung wird die eingangs genannte Aufgabe gelöst durch ein Kopfelement mit den Merkmalen des Anspruchs 12.

Gemäß einem weiteren Aspekt der Erfindung wird die eingangs genannte Aufgabe gelöst durch ein Verfahren zur Herstellung einer Förderrolle für Förderanlagen zum Fördern von Behältern, Paletten und dergleichen, mit den Merkmalen des Anspruchs 13.

Zu den Vorteilen, Ausführungsvarianten und Ausführungsdetails des erfindungsgemäßen Kopfelements und des erfindungsgemäßen Verfahrens sowie der jeweiligen Fortbildungen wird auf die vorangegangene Beschreibung zu den entsprechenden Merkmalen der erfindungsgemäßen Förderrolle verwiesen.

Eine bevorzugte Ausführungsform der Erfindung wird beispielhaft anhand der beiliegenden Figuren beschrieben. Es zeigen:
- Fig.1:: eine dreidimensionale Explosionsdarstellung eines Kopfelements für eine Förderrolle;
- Fig. 2:: einen Längsschnitt durch das Kopfelement gemäß Fig. 1; und
- Fig. 3:: eine längsgeschnittene Ansicht einer Förderrolle mit einem Kopfelement.

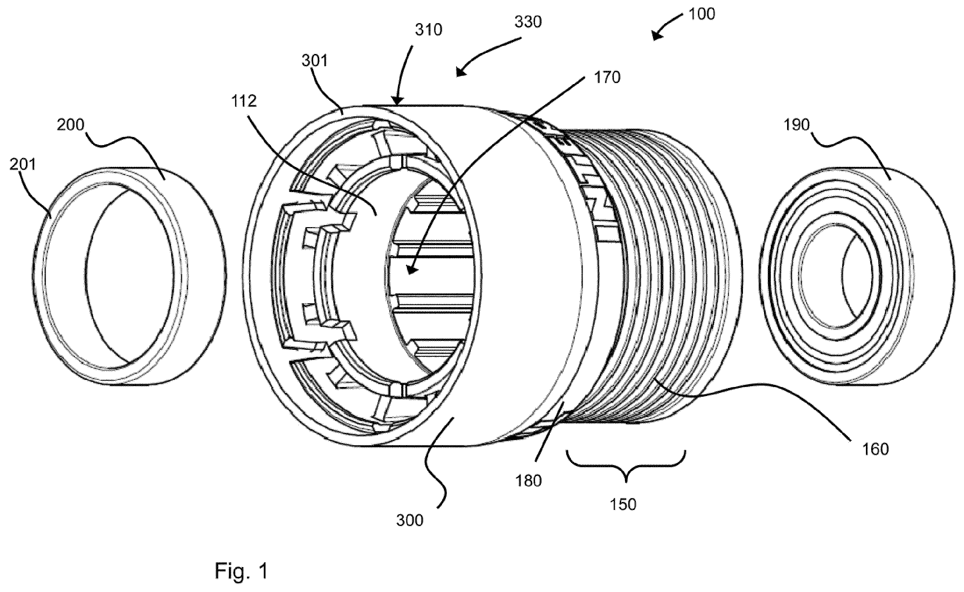

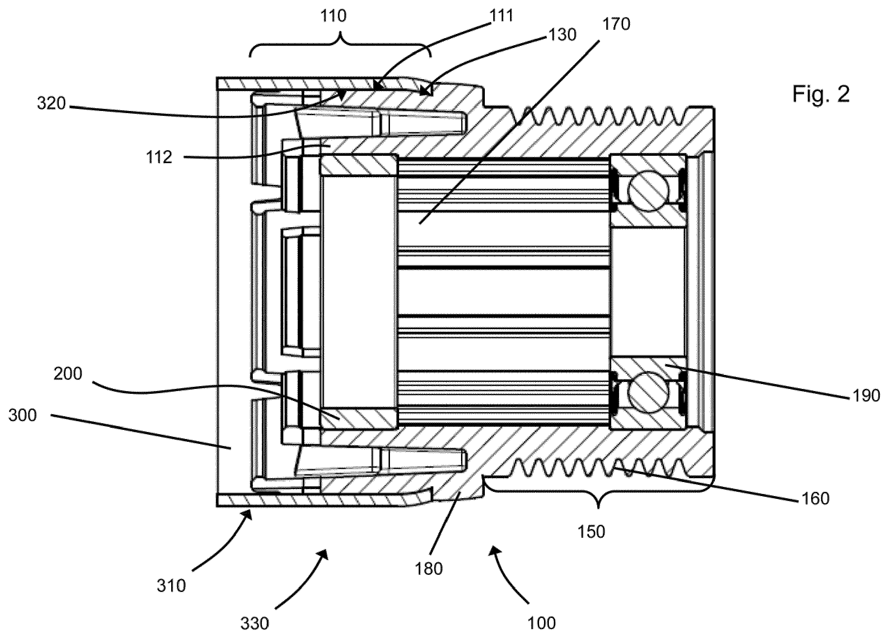

Das in den Figuren 1 bis 3 dargestellte Kopfelement 100 weist einen Einführabschnitt 110 zum Einführen in ein hohles Ende 330 eines Rollenkörpers 300 auf. Das Kopfelement 100 weist vorzugsweise Kunststoff auf oder besteht aus Kunststoff, beispielsweise Polyamid. Der äußere zylindrische Umfang 111 des Einführabschnitts 110 des Kopfelements 100 ist vorzugsweise gleich oder geringfügig größer ausgebildet als der Innenumfang 320 des hohlen Endes 330 des Rollenkörpers, so dass beim Einstecken des Einführabschnitts 110 in das hohle Ende 330 des Rollenkörpers 300 ein Reibschluss entsteht.

Das Kopfelement 100 weist einen inneren Hohlraum 170 auf, der ausgebildet ist, beispielsweise Lagerelemente zur drehbaren Lagerung des Kopfelements 100 aufzunehmen. Solche Lagerelemente können beispielsweise eine Wälzlagerung 190 für die Lagerung eines Lagerzapfens umfassen. Der Lagerzapfen wird vorzugsweise gebildet durch eine mit einem Innengewinde versehene Hülse, die am Innenring des Wälzlagers gelagert ist, und eine Schraube, welche in dieses Innengewinde eingeschraubt werden kann. Zwischen der Hülse und der Schraube kann eine Unterlegscheibe angeordnet sein. Über eine solche Wälzlagerung kann die Förderrolle über das Kopfelement 100 an einem Gestell drehbar gelagert werden.

Die Förderrolle kann grundsätzlich auch in anderer Weise als mittels einer Hülse und einer darin eingeschraubten Schraube in einem Gestell montiert sein. So ist beispielsweise auch eine Ausführung vorteilhaft, bei welcher ein gewindeloser Lagerzapfen zur Befestigung dient. Dieser Lagerzapfen kann beispielsweise an der Förderrolle befestigt sein, insbesondere in Längsrichtung der Rolle axial verschieblich und nach außen federvorgespannt sein, um eine einfache und schnelle Montage der Förderrolle zu bewerkstelligen. In entsprechender Weise kann auch auf der anderen Seite der Förderrolle eine andere konstruktive Ausführung vorgesehen sein, insbesondere ein Lagerzapfen mit einer nicht zylindrischen Umfangsfläche, beispielsweise einem Vier- oder Sechskant, zur drehmomentfesten Montage der Förderrolle in einer entsprechend nicht-zylindrischen Öffnung im Gestell.

Der Einführabschnitt 110 weist in einer Ebene orthogonal zur Rollenachse einen zylindrischen Querschnitt auf, insbesondere einen hohlzylindrischen Querschnitt. Das Kopfelement 100 weist neben dem Einführabschnitt 110 einen Übertragungsabschnitt 150 auf zur Übertragung der Rotation des Rollenkörpers an eine oder mehrere weitere Förderrollen. Der Übertragungsabschnitt 150 weist dazu an seinem Außenumfang ein Mehrfach-V-Profil 160 auf, das einen oder mehrere Poly-V-Riemen (nicht dargestellt) aufnehmen kann. Zwischen dem Einführabschnitt 110 und dem Übertragungsabschnitt 150 ist ein Übergangsstück 180 angeordnet. Der Einführabschnitt 110 verjüngt sich an seinem den Übertragungsabschnitt 150 zugewandte Enden 130 hin. Bis zu diesem Ende 130 wird der Einführabschnitt 110 in das hohle Ende 330 des Rollenkörpers 300 eingeführt. Wie in Figur 1 gezeigt wird dann das Ende des Rollenkörpers 300 im Bereich 130 des Kopfelements 100 an dieses verjüngte Ende 130 des Einführabschnitts 110 angeformt bzw. gebördelt. Dadurch entsteht ein Formschluss zwischen dem Einführabschnitt des Kopfelements und dem hohlen Ende 330 des Rollenkörpers 300, der insbesondere eine relative Axialbewegung zwischen Rollenkörper und Kopfelement verhindert bzw. reduziert.

Die Dicke oder Wandstärke 201 des Versteifungsrings 200 ist größer als die Dicke oder Wandstärke 301 des Rollenkörpers 300. Zwischen dem hohlen Ende 330 des Rollenkörpers 300 und dem Versteifungsring 200 liegt ein ringförmiger Teil 112 des Einführabschnitts 110, der den Außenumfang des Versteifungsrings 200 umgibt.

Im innenliegenden Endbereich des Kopfelements kann ein zweites Lager aufgenommen werden, was insbesondere dann erforderlich ist, wenn eine nicht kippstabile Befestigung des Lagerzapfens im Gestell vorgesehen ist, beispielsweise bei einem federbeaufschlagten, axial verschieblichen Zapfen zur leichteren und schnellen Montage der Förderrolle, wie den zuvor beschriebenen Sechskantzapfen.

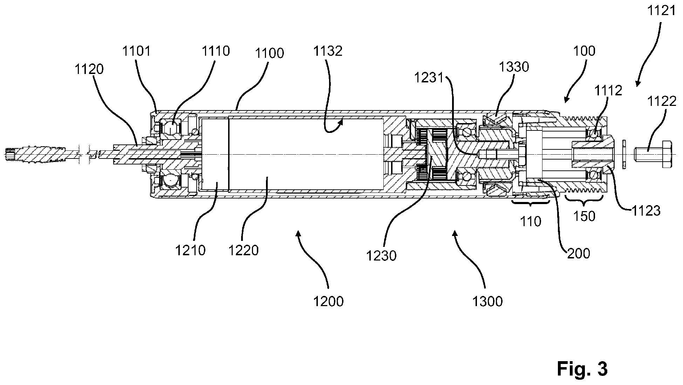

Figur 3 zeigt den grundsätzlichen Aufbau einer Förderrolle, die hier als motorbetriebene Förderrolle ausgebildet ist. In einem Rollenkörper 1100 ist an einem ersten Ende eine mit dem Rollenkörper fest verbundene Endkappe 1101 eingesetzt, innerhalb der ein Wälzlager 1110 angeordnet ist. Das Wälzlager 1110 dient zur drehbaren Lagerung eines Lagerzapfens 1120. Der Lagerzapfen 1120 ist an einem nach außen weisenden Ende mit einem Außengewinde versehen, auf dem eine Mutter aufgeschraubt ist und mit Hilfe derer der Lagerzapfen drehmomentfest in einer Öffnung eines Gestells befestigt werden kann, in dem das Gestell zwischen der Mutter und einer auf dem Gewinde einwärts von der Mutter festgesetzten Hülse geklemmt wird.

Der Rollenkörper 1100 weist eine innere Umfangsfläche 1132 auf, die einen Innenraum in dem Rollenkörper nach radial begrenzt.

Der Lagerzapfen 1120 ist hohl ausgeführt und durch die Innenbohrung des Lagerzapfens 1120 werden Versorgungs- und Steuerleitungen zu einer Antriebseinheit 1200 geleitet. Die Antriebseinheit 1200 ist innerhalb des Rollenkörpers 1100 angeordnet und drehmomentfest mit dem Lagerzapfen 1120 verbunden. Die Antriebseinheit 1200 weist an ihrem zum Lagerzapfen 1120 weisenden Ende eine Steuerungselektronik 1210 zur Ansteuerung eines elektrischen Antriebsmotors 1220 auf, der vorzugsweise als bürstenloser, dreiphasiger Gleichstrommotor mit Innenläufern ausgeführt ist. Der Antriebsmotor 1220 ist zwischen der Steuerungselektronik 1210 und einem Planetengetriebe 1230 der Antriebseinheit 1200 angeordnet, welches an dem von dem Lagerzapfen 1120 wegweisenden Ende der Antriebseinheit angeordnet ist.

Das Planetengetriebe 1230 weist eine mit einem Sechskantquerschnitt ausgeführte Abtriebswelle 1231 auf, die formschlüssig mit einer Kupplungseinheit 1300 drehmomentfest verbunden ist. Die Kupplungseinheit 1300 ist mittels eines Anpressringes 1330 reibschlüssig an der Innenwand des Rollenkörpers festgesetzt und überträgt das Drehmoment der Antriebseinheit und die Rotation der Abtriebswelle auf den Rollenkörper. Der Rollenkörper dreht sich in Folge dessen mit dem Antriebsdrehmoment relativ zu dem Lagerzapfen und der Antriebseinheit 1200.

An dem dem Lagerzapfen 1120 gegenüberliegenden Ende des Rollenkörpers ist ein Kopfelement 100 drehmomentfest in den Rollenkörper eingesetzt. Wie oben beschrieben, weist dieses Kopfelement neben dem Einführabschnitt 110 mit Versteifungsring 200 einen Übertragungsabschnitt 150 mit mehreren W-förmigen Umfangsnuten auf, mittels derer die Rotation und das Drehmoment der Förderrolle auf benachbarte Leerlaufrollen übertragen werden kann. Innerhalb des Kopfelements 100 ist wiederum eine Wälzlagerung 1112 für die Lagerung eines endseitigen Lagerzapfens 1121 angeordnet. Der Lagerzapfen 1121 wird gebildet durch eine mit einem Innengewinde versehene Hülse 1123, die am Innenring des Wälzlagers 1112 gelagert ist und eine Schraube 1122, welche in dieses Innengewinde eingeschraubt werden kann, um die Förderrolle auch an diesem Ende an einem Gestell befestigen zu können.

Das dargestellte Kopfelement 100 hat insbesondere die folgenden Vorteile und Wirkungen: Beim Einpressen des Kopfelements 100 in das hohle Ende 330 des Rollenkörpers 300 wird das hohle Ende 330 an seiner vorderen Kante umgebördelt, um das Kopfelement 100 axial im hohlen Ende 330 des Rollenkörpers 300 zu sichern. Die Bördelung als solche gewährleistet jedoch noch keine sichere Drehmomentübertragung , da die Flächenpressung (Innenwandung des hohlen Endes 330 des Rollenkörpers 300 auf Presssitzaußenseite 111 des Kopfelements 100) nicht nur über die Bördelung, sondern maßgeblich über die Eigenschaften des Materials des Kopfelements 100 beeinflusst wird. Das Kopfelement 100 ist aus Kunststoff ausgebildet und derart geformt, dass kein hinreichender Gegendruck zur Bördelung aufgebaut werden kann. Somit muss das Kopfelement 100 zusätzlich ausgesteift werden. Durch die Einführung des Versteifungsrings 200 wird der Gegendruck bzw. die Festigkeit, insbesondere die geometrische Festigkeit, des Kopfelements 100 dahingehend erhöht, dass ein hinreichender Gegendruck entsteht, der wiederum zu hinreichender Drehmomentübertragung führt. Durch den Einsatz des Versteifungsrings 200 wird die Deformierbarkeit des Presssitzes des Kopfelements 100 deutlich reduziert. Da der Versteifungsring 200 in seiner Wandstärke 201 dicker ist als die Wandstärke 301 des hohlen Endes 330 des Rollenkörpers 300, ergibt sich ein Kräftegleichgewicht zwischen Bördeldruck und Steifigkeit des Versteifungsrings 200. Das dazwischen liegende Kunststoffmaterial 112 des Kopfelements 100 ist hinreichend druckbelastbar, um zwischen den beiden Metallteilen (Versteifungsring 200 und hohles Ende 330 des Rollenkörpers 300) nicht zerstört zu werden und die notwendige Drehmomentsteifigkeit aufzubringen.

Ein weiterer Vorteil ist, dass das Versteifungselement 200 auch der Schrumpfung des Kunststoffes des Kopfelements 100 unter Tiefkühlbedingungen vorbeugt, da das Versteifungselement 200 - als Metallring ausgeführt - den gleichen bzw. einen ähnlichen Wärmeausdehnungskoeffizient hat wie der Rollenkörper 300.

## Patentansprüche

1. Förderrolle für Förderanlagen zum Fördern von Behältern, Paletten und dergleichen, umfassend
- einen Rollenkörper (300) mit einer Rollenachse, dessen Außenumfangsfläche (310) eine Auflagefläche für Fördergut darstellt, und
- ein Kopfelement (100), das mit einem Einführabschnitt (110) mit einer zylindrischen Außenoberfläche (111) in ein hohles Ende (330) des Rollenkörpers (300) eingeführt ist,
wobei der Einführabschnitt (110) des Kopfelements (100) ein Versteifungselement (200) aufweist;
**dadurch gekennzeichnet, dass** das Versteifungselement (200) ein erstes Material aufweist oder daraus besteht und das Kopfelement (100) ein zweites Material aufweist oder daraus besteht und das erste Material ein anderes Material ist als das zweite Material und das erste Material eine höhere Steifigkeit aufweist als das zweite Material.

2. Vorrichtung nach dem vorhergehenden Anspruch,
**dadurch gekennzeichnet, dass** das Kopfelement (100) an das Versteifungselement (200) angeformt ist.

3. Vorrichtung nach einem der vorhergehenden Ansprüche,
**dadurch gekennzeichnet, dass** das Versteifungselement (200) als Versteifungsring ausgebildet ist mit einem Innendurchmesser, einem Außendurchmesser und einer axialen Erstreckung.

4. Förderrolle nach dem vorhergehenden Anspruch,
**dadurch gekennzeichnet, dass** eine Dicke des Versteifungsrings (200) zwischen seinem Innen- und seinem Außendurchmesser entlang der axialen Erstreckung variiert.

5. Förderrolle nach einem der vorhergehenden Ansprüche,
**dadurch gekennzeichnet, dass** das Kopfelement (100) einen Übertragungsabschnitt (150) zum Übertragen eines Drehmoments an ein Übertragungselement aufweist.

6. Förderrolle nach dem vorhergehenden Anspruch,
**dadurch gekennzeichnet, dass** sich der Einführabschnitt (110) an seinem dem Übertragungsabschnitt (150) zugewandten Ende (130) hin verjüngt.

7. Förderrolle nach einem der vorhergehenden Ansprüche,
**dadurch gekennzeichnet, dass** das Ende (330) des Rollenkörpers (300) eine Bördelung aufweist.

8. Förderrolle nach dem vorhergehenden Anspruch,
**dadurch gekennzeichnet, dass** die Bördelung des Rollenkörpers (300) in einem Bereich eines dem Übertragungsabschnitt (150) zugewandten Ende des Einführabschnitts (110) angeordnet ist.

9. Förderrolle nach einem der beiden vorhergehenden Ansprüche,
**dadurch gekennzeichnet, dass** die Bördelung des Rollenkörpers (300) in das verjüngte Ende (130) des Einführabschnitts (110) eingreift.

10. Förderrolle nach einem der vorhergehenden Ansprüche 5 bis 9,
**dadurch gekennzeichnet, dass** das Versteifungselement (200) zwischen einem dem Übertragungsabschnitt (150) zugewandten Ende und einem dem Übertragungsabschnitt (150) abgewandten Ende des Einführabschnitts (110) angeordnet ist.

11. Förderrolle nach einem der vorhergehenden Ansprüche,
**dadurch gekennzeichnet, dass** das Versteifungselement (200) derart an dem Einführabschnitt (110) angeordnet ist, dass ein ringförmiger Teil des Einführabschnitts den Außenumfang des Versteifungselements (200) umgibt.

12. Kopfelement (100) für eine Förderrolle für Förderanlagen zum Fördern von Behältern, Paletten und dergleichen,
das Kopfelement umfassend einen Einführabschnitt (110) mit einer zylindrischen Außenoberfläche (111), mit dem das Kopfelement (100) in ein hohles Ende (330) eines Rollenkörpers (300) einer Förderrolle einführbar ist,
wobei der Einführabschnitt des Kopfelements (100) ein Versteifungselement (200) aufweist;
**dadurch gekennzeichnet, dass** das Versteifungselement (200) ein erstes Material aufweist oder daraus besteht und das Kopfelement (100) ein zweites Material aufweist oder daraus besteht und das erste Material ein anderes Material ist als das zweite Material und das erste Material eine höhere Steifigkeit aufweist als das zweite Material.

13. Verfahren zur Herstellung einer Förderrolle für Förderanlagen zum Fördern von Behältern, Paletten und dergleichen, insbesondere einer Förderrolle nach einem der vorhergehenden Ansprüche 1 -11,
umfassend die Schritte:
- Bereitstellen eines Rollenkörpers (300) mit einer Rollenachse, dessen Außenumfangsfläche (310) eine Auflagefläche für Fördergut darstellt,
- Bereitstellen eines Kopfelements (100) mit einem Einführabschnitt (110) mit einer zylindrischen Außenoberfläche (111) zum Einführen in ein hohles Ende (330) des Rollenkörpers (300), wobei der Einführabschnitt (110) des Kopfelements (100) ein Versteifungselement (200) aufweist und das Versteifungselement (200) ein erstes Material aufweist oder daraus besteht und das Kopfelement (100) ein zweites Material aufweist oder daraus besteht und das erste Material ein anderes Material ist als das zweite Material und das erste Material eine höhere Steifigkeit aufweist als das zweite Material,
- Einführen des Einführabschnitts (110) des Kopfelements (100) mit dem Versteifungselement (200) in das hohle Ende (330) des Rollenkörpers (300).

## Claims

1. Conveyor roller for conveyor systems for conveying containers, pallets and the like, comprising:
- a roller member (300) having a roller shaft whose outer peripheral face (310) constitutes a support face for material to be conveyed, and
- a head element (100) which is introduced with an introduction portion (110) with a cylindrical outer surface (111) into a hollow end (330) of the roller member (300),
wherein the introduction portion (110) of the head element (100) has a reinforcement element (200),
**characterised in that** the reinforcement element (200) has or comprises a first material and the head element (100) has or comprises a second material, and the first material is a different material from the second material and the first material has a higher level of rigidity than the second material.

2. Device according to the preceding claim, **characterised in that** the head element (100) is formed on the reinforcement element (200).

3. Device according to either of the preceding claims, **characterised in that** the reinforcement element (200) is constructed as a reinforcement ring having an inner diameter, an outer diameter and an axial extent.

4. Conveyor roller according to the preceding claim, **characterised in that** a thickness of the reinforcement ring (200) between the inner diameter and outer diameter thereof varies over the axial extent.

5. Conveyor roller according to any one of the preceding claims, **characterised in that** the head element (100) has a transmission portion (150) for transmitting a torque to a transmission element.

6. Conveyor roller according to the preceding claim, **characterised in that** the introduction portion (110) tapers at the end (130) thereof facing the transmission portion (150).

7. Conveyor roller according to any one of the preceding claims, **characterised in that** the end (330) of the roller member (300) has a flange.

8. Conveyor roller according to the preceding claim, **characterised in that** the flange of the roller member (300) is arranged in a region of an end of the introduction portion (110) facing the transmission portion (150).

9. Conveyor roller according to either of the two preceding claims, **characterised in that** the flange of the roller member (300) engages in the tapered end (130) of the introduction portion (110).

10. Conveyor roller according to any one of the preceding claims 5 to 9, **characterised in that** the reinforcement element (200) is arranged between an end facing the transmission portion (150) and an end of the introduction portion (110) facing away from the transmission portion (150).

11. Conveyor roller according to any one of the preceding claims, **characterised in that** the reinforcement element (200) is arranged on the introduction portion (110) in such a manner that an annular portion of the introduction portion surrounds the outer periphery of the reinforcement element (200).

12. Head element (100) for a conveyor roller for conveyor systems for conveying containers, pallets and the like,
the head element comprising an introduction portion (110) having a cylindrical outer surface (111), with which the head element (100) can be introduced into a hollow end (330) of a roller member (300) of a conveyor roller,
wherein the introduction portion of the head element (100) has a reinforcement element (200);
**characterised in that** the reinforcement element (200) has or comprises a first material and the head element (100) has or comprises a second material and the first material is a different material from the second material and the first material has a higher level of rigidity than the second material.

13. Method for producing a conveyor roller for conveying systems for conveying containers, pallets and the like according to any one of the preceding claims 1 to 11, comprising the steps of:
- providing a roller member (300) with a roller shaft whose outer peripheral face (310) constitutes a support face for material to be conveyed,
- providing a head element (100) with an introduction portion (110) having a cylindrical outer surface (111) for introducing into a hollow end (330) of the roller member (300), wherein the introduction portion (110) of the head element (100) has a reinforcement element (200) and the reinforcement element (200) has or comprises a first material and the head element (100) has or comprises a second material and the first material is a different material from the second material and the first material has a higher level of rigidity than the second material,
- introducing the introduction portion (110) of the head element (100) with the reinforcement element (200) into the hollow end (330) of the roller member (300).

## Revendications

1. Rouleau de manutention pour des installations de manutention destinées à manutentionner des conteneurs, des palettes ou similaires, comprenant
- un corps de rouleau (300) avec un axe de rouleau dont la surface circonférentielle extérieure (310) représente une surface de support pour un produit à manutentionner, et
- une tête (100) qui est insérée dans une extrémité (330) creuse du corps de rouleau (300) avec une section d'insertion (110) avec une surface extérieure (111) cylindrique,
dans lequel la section d'insertion (110) de la tête (100) comporte un raidisseur (200) ; **caractérisé en ce que** le raidisseur (200) comporte un premier matériau, ou en est constitué, et la tête (100) comporte un deuxième matériau, ou en est constituée, et le premier matériau est un autre matériau que le deuxième matériau, et le premier matériau comporte une rigidité plus élevée que le deuxième matériau.

2. Dispositif selon la revendication précédente,
**caractérisé en ce que** la tête (100) est formée sur le raidisseur (200).

3. Dispositif selon l'une des revendications précédentes,
**caractérisé en ce que** le raidisseur (200) est conçu sous la forme d'un anneau raidisseur avec un diamètre intérieur, un diamètre extérieur et une extension axiale.

4. Rouleau de manutention selon la revendication précédente,
**caractérisé en ce qu'**une épaisseur de l'anneau raidisseur (200) entre son diamètre intérieur et son diamètre extérieur varie le long de l'extension axiale.

5. Rouleau de manutention selon l'une des revendications précédentes,
**caractérisé en ce que** la tête (100) comporte une section de transmission (150) pour la transmission d'un couple à un élément de transmission.

6. Rouleau de manutention selon la revendication précédente,
**caractérisé en ce que** la section d'insertion (110) s'amenuise sur son extrémité (130) orientée vers la section de transmission (150).

7. Rouleau de manutention selon l'une des revendications précédentes,
**caractérisé en ce que** l'extrémité (330) du corps de rouleau (300) comporte un bordage.

8. Rouleau de manutention selon la revendication précédente,
**caractérisé en ce que** le bordage du corps de rouleau (300) est agencé dans une zone d'une extrémité orientée vers la section de transmission (150) de la section d'insertion (110).

9. Rouleau de manutention selon l'une des deux revendications précédentes,
**caractérisé en ce que** le bordage du corps de rouleau (300) s'engage dans l'extrémité amenuisée (130) de la section d'insertion (110).

10. Rouleau de manutention selon l'une des revendications précédentes 5 à 9,
**caractérisé en ce que** le raidisseur (200) est disposé entre une extrémité orientée vers la section de transmission (150) et une extrémité opposée à la section de transmission (150) de la section d'insertion (110).

11. Rouleau de manutention selon l'une des revendications précédentes,
**caractérisé en ce que** le raidisseur (200) est agencé sur la section d'insertion (110) de telle manière qu'une partie en forme d'anneau de la section d'insertion entoure le périmètre extérieur du raidisseur (200).

12. Tête (100) pour un rouleau de manutention pour des installations de manutention destinées à manutentionner des conteneurs, des palettes et similaires,
la tête comprenant une section d'insertion (110) avec une surface extérieure (111) cylindrique, avec laquelle la tête (100) peut être insérée dans une extrémité (330) creuse d'un corps de rouleau (300) d'un rouleau de manutention,
dans laquelle la section d'insertion de la tête (100) comporte un raidisseur (200) ;
**caractérisée en ce que** le raidisseur (200) comporte un premier matériau, ou en est constitué, et la tête (100) comporte un deuxième matériau, ou en est constituée, et le premier matériau est un autre matériau que le deuxième matériau, et le premier matériau comporte une rigidité plus élevée que le deuxième matériau.

13. Procédé de fabrication d'un rouleau de manutention pour des installations de manutention destinées à manutentionner des conteneurs, des palettes et similaires selon l'une des revendications précédentes 1 à 11,
comprenant les étapes :
- de préparation d'un corps de rouleau (300) avec un axe de rouleau dont la surface circonférentielle extérieure (310) représente une surface de support pour un produit à manutentionner,
- de préparation d'une tête (100) avec une section d'insertion (110) avec une surface extérieure (111) cylindrique pour l'insertion dans une extrémité (330) creuse du corps de rouleau (300), dans lequel la section d'insertion (110) de la tête (100) comporte un raidisseur (200) et le raidisseur (200) comporte un premier matériau, ou en est constitué, et la tête (100) comporte un deuxième matériau, ou en est constituée, et le premier matériau est un autre matériau que le deuxième matériau, et le premier matériau comporte une rigidité plus élevée que le deuxième matériau,
- d'insertion de la section d'insertion (110) de la tête (100) avec le raidisseur (200) dans l'extrémité (330) creuse du corps de rouleau (300).
